# EUROPEAN PATENT APPLICATION

(11) **EP 4 650 080 A1**
(43) Date of publication of application: **19.11.2025**
(21) Application number: 24756723.3
(22) Date of filing: 05.02.2024
(51) Int. Cl.: B22D 11/16, G01F 23/80, G01F 23/292

(54) **CONTINUOUS CASTING SYSTEM AND MELT LEVEL ESTIMATION METHOD**

(30) Priority: 13.02.2023 JP 2023020161
(71) Applicant: NIPPON STEEL CORPORATION, Chiyoda-ku Tokyo 100-8071 (JP)
(72) Inventor: MAEGAWA Hiroki, Tokyo 100-8071 (JP); MATSUOKA Yukihiro, Tokyo 100-8071 (JP)
(74) Representative: Vossius & Partner Patentanwälte Rechtsanwälte mbB
(86) International application number: PCT/JP2024/003704
(87) International publication number: WO 2024/171873

(57) **Abstract**

A continuous casting system 1 includes: a camera 21 configured to capture a meniscus of molten steel contained in a mold 5 for continuous casting and an inner surface of the mold 5; and an estimation unit 123 configured to estimate a boundary position between the meniscus and the inner surface of the mold 5 within the field of view of the camera 21 based on an estimation model and new input data, the estimation model being generated by machine learning so as to represent a relationship between input data based on video data including a plurality of images captured in time series by the camera 21 and the boundary position.

## Description

### Technical Field

The present disclosure relates to a continuous casting system and a meniscus estimation method.

### Background Art

Patent Literature 1 discloses a method in which an optical-type meniscus meter captures a portion where an inner surface of a mold and a molten metal surface are in contact, and detects a position of a contact point between the inner surface of the mold and the molten metal surface in a captured image.

### Citation List

### Patent Literature

[Patent Literature 1] Japanese Unexamined Patent Publication No. H01-293953

### Summary of Invention

### Technical Problem

The present disclosure provides a continuous casting system beneficial for estimating a boundary position between a meniscus and an inner surface of a mold with high reliability.

### Solution to Problem

A continuous casting system according to one aspect of the present disclosure includes: a camera configured to capture a meniscus of molten steel contained in a mold for continuous casting and an inner surface of the mold; and an estimation unit configured to estimate a boundary position between the meniscus and the inner surface of the mold within the field of view of the camera based on an estimation model and new input data, the estimation model being generated by machine learning so as to represent a relationship between input data based on video data including a plurality of images captured in time series by the camera and the boundary position.

When there is a large difference in brightness between the meniscus and the inner surface of the mold within an image, the boundary position can be readily recognized by dividing the image into a region corresponding to the meniscus and a region corresponding to the inner surface of the mold by way of comparison with a single threshold value. However, in continuous casting, the difference in brightness is often small, and the boundary position cannot be accurately recognized with the above-described approach in some cases. For example, in some cases, continuous casting is performed by supplying a powder-like release agent to molten steel injected into the mold. Hereinafter, this type of continuous casting is referred to as "powder casting." In powder casting, the powder release agent floating on the meniscus reduces the brightness difference between the meniscus and the inner surface of the mold. In contrast, according to the present device, the boundary position is estimated based on the estimation model generated by machine learning so as to represent the relationship between input data based on the video data and the boundary position, and on new input data, and based on the video data for estimating the boundary position. By using the video data, information not derivable from a single image, such as information regarding the movement in each part of the image, can be acquired. Therefore, according to the present device, the boundary position can be estimated with high reliability even when the brightness difference is small.

A displacement map generation unit configured to generate, based on the video data, a displacement map representing displacement vectors in time series for each of a plurality of areas in the field of view of the camera may be further provided. The estimation model may be generated so as to represent a relationship between the input data including the displacement map and the boundary position, and the estimation unit may be configured to estimate the boundary position based on the estimation model and new input data including a newly generated displacement map. By converting distribution of time-series displacement tendencies into data as a displacement map and incorporating the displacement map into the input data, the boundary position can be estimated readily and reliably.

A brightness map generation unit configured to generate, based on the video data, a brightness map representing brightness for each of a plurality of areas may be further provided. The estimation model may be generated so as to represent a relationship between the input data further including the brightness map and the boundary position, and the estimation unit may be configured to estimate the boundary position based on the estimation model and new input data further including a newly generated brightness map. Even when powder floats on the meniscus, a certain degree of brightness difference may still occur between the meniscus and the inner surface of the mold. Therefore, by further including the brightness map in the input data, the boundary position can be estimated with higher reliability.

The brightness map generation unit may be configured to generate a brightness map for each of a plurality of colors; the estimation model may be generated so as to represent a relationship between the boundary position and the input data further including the brightness maps of the plurality of colors; and the estimation unit may be configured to estimate the boundary position based on the estimation model and new input data further including newly generated brightness maps for the plurality of colors. Even when the brightness difference between the meniscus and the inner surface of the mold is small, there may still be a relatively large difference in color between the meniscus and the mold. Therefore, by further incorporating the brightness maps for a plurality of colors into the input data, the boundary position can be estimated with higher reliability.

A ground truth data acquisition unit configured to acquire ground truth data indicating the boundary position recognized, without relying on the estimation model, based on the video data; a storage unit configured to accumulate, in a database, a training record in which the input data is associated with the ground truth data; and a model generation unit configured to generate the estimation model by machine learning based on a plurality of training records stored in the database may be further provided. Because the device itself executes a series of processes from accumulating training records to generating the estimation model based on the accumulated learning data, convenience can be improved.

The model generation unit may be configured to generate the estimation model by deep learning. The difficult-to-formulate relationship between the input data based on the video data and the boundary position can be modeled with high reliability through deep learning.

A control unit configured to control an inflow amount of the molten steel into the mold so as to bring the meniscus (molten steel surface) closer to a target height based on the estimated boundary position may be further provided. The estimation results of the boundary position can be utilized for automatically adjusting the height of the meniscus.

The control unit may be configured to calculate a height of the meniscus based on the inflow amount of the molten steel into the mold, and may be configured not to perform control of the inflow amount of the molten steel based on an estimation result of the boundary position when a difference between the height of the meniscus corresponding to the boundary position estimated by the estimation unit and a calculation result of the height of the meniscus based on the inflow amount of the molten steel exceeds a predetermined level. The reliability of control based on the estimation result of the boundary position can be improved.

A meniscus estimation method according to another aspect of the present disclosure includes: acquiring, by a camera configured to capture a meniscus of molten steel contained in a mold for continuous casting and an inner surface of the mold, video data including a plurality of images captured in time series; generating input data based on the video data; acquiring ground truth data indicating a recognition result of a boundary position between the meniscus and the inner surface of the mold in the field of view of the camera, the recognition result being based on the video data; accumulating, in a database, a training record associating the input data with the ground truth data; generating, based on a plurality of training records stored in the database, an estimation model representing a relationship between the input data and the boundary position; generating new input data based on newly acquired video data; and estimating the boundary position based on the estimation model and the new input data.

### Advantageous Effects of Invention

According to the present disclosure, a continuous casting system beneficial for estimating, with high reliability, a boundary position between a meniscus and an inner surface of a mold can be provided.

### Brief Description of Drawings

FIG. 1 is a diagram schematically illustrating an example configuration of a continuous casting system.
FIG. 2 is a block diagram illustrating an example functional configuration of a control system.
FIG. 3 is a diagram schematically illustrating an example of a displacement map.
FIG. 4 is a diagram schematically illustrating an example of an estimation model.
FIG. 5 is a block diagram illustrating an example hardware configuration of the control system.
FIG. 6 is a flowchart illustrating an example procedure for generating the estimation model.
FIG. 7 is a flowchart illustrating an example procedure for controlling the height of the meniscus.

### Description of Embodiments

Embodiments will now be described in detail with reference to the drawings. In the description, the same reference signs are given to elements having the same or similar functions, and redundant description may be omitted.

### [Continuous Casting System]

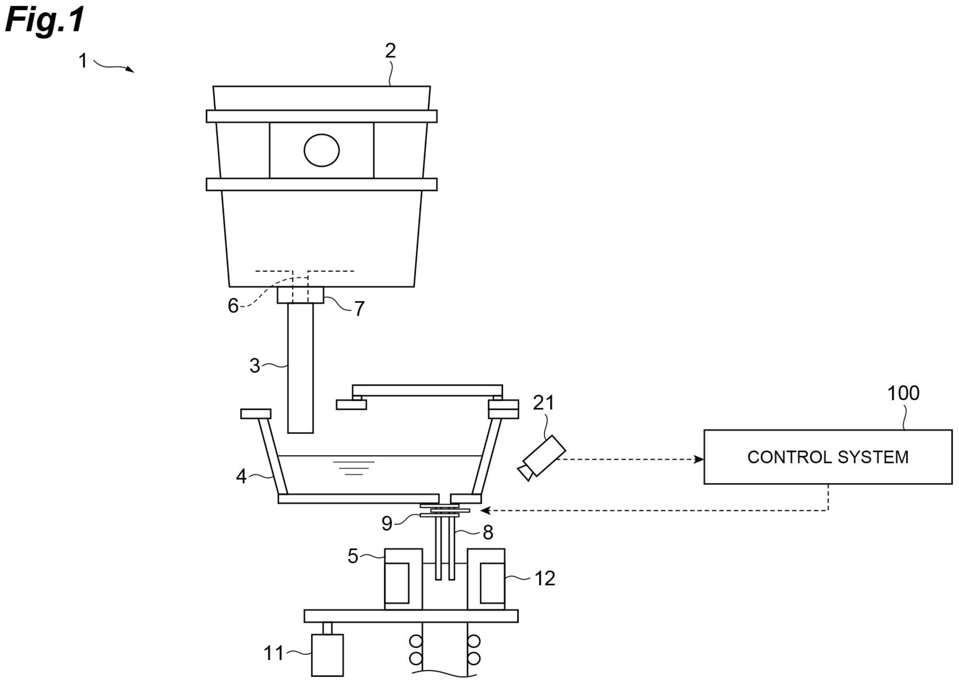

FIG. 1 schematically illustrates an example configuration of a continuous casting system. A continuous casting system 1 illustrated in FIG. 1 is a system for producing a steel slab by continuous caster. As an example, the continuous casting system 1 manufactures a steel slab by powder casting, in which a powder-like release agent is supplied to molten steel contained in a mold.

The continuous casting system 1 includes: a ladle 2, a ladle shroud 3, a tundish 4, a mold 5, a mold oscillation device 11, an electromagnetic stirring device 12, a camera 21, and a control system 100. The ladle 2 accommodates molten steel produced in a blast furnace. The ladle 2 has, in its lower portion, a pouring hole 6 and a gate 7. The pouring hole 6 discharges molten steel downward. The gate 7 opens and closes the pouring hole 6.

The ladle shroud 3 is provided below the pouring hole 6 and guides the molten steel discharged from the pouring hole 6 downward. The tundish 4 accommodates the molten steel guided from above by the ladle shroud 3. The tundish 4 has a submerged entry nozzle 8 and a gate 9. The submerged entry nozzle 8 is provided below the tundish 4 and guides molten steel accommodated in the tundish 4 downward. The gate 9 opens and closes a flow passage of molten steel in the submerged entry nozzle 8.

The mold 5 accommodates the molten steel guided from above by the submerged entry nozzle 8 and delivers it downward while shaping the molten steel. The lower end of the submerged entry nozzle 8 may be immersed in molten steel contained in the mold 5. The molten steel gradually solidifies while passing through the mold 5. The molten steel discharged downward after passing through the mold 5 is conveyed by a plurality of conveyance rolls and cut into steel slabs by, for example, a gas cutter.

The mold oscillation device 11 vibrates the mold 5 in the vertical direction so that the release agent dissolved on the meniscus flows between the inner surface of the mold 5 and the molten steel. For example, the mold oscillation device 11 vibrates the mold 5 up and down by using the power of a motor such as an electric or a hydraulic (for example, oil-hydraulic) motor.

The electromagnetic stirring device 12 stirs the molten steel in the mold 5 so as to prevent impurities contained in the molten steel from being fixed to the solidified portion of the molten steel. For example, the electromagnetic stirring device 12 generates, in the mold 5, a magnetic field for flowing the molten steel, in response to a supply of electric power.

The camera 21 captures the meniscus of molten steel contained in the mold 5 and the inner surface of the mold 5. For example, the camera 21 may be a visible-light camera capable of capturing color images, capturing the meniscus and the inner surface of the mold 5 obliquely from above through the space between the tundish 4 and the mold 5. For example, the camera 21 includes an image sensor such as a charge coupled device (CCD) or a complementary metal oxide semiconductor (CMOS) image sensor and generates image data of the meniscus and the inner surface of the mold 5 based on electrical signals produced by the image sensor in response to incident light. The image data includes pixel values of a plurality of pixels arranged in a matrix. The pixel values represent brightness. The image data may include pixel values for a plurality of colors for each of the plurality of pixels. The plurality of colors are red, green, and blue (RGB), for example.

Based on images captured by the camera 21 (for example, the above image data), the control system 100 recognizes the boundary position between the meniscus and the inner surface of the mold 5 in the image, and controls the gate 9 so that the height of the meniscus is brought closer to a target height based on the recognition result for the boundary position. When the brightness difference between the meniscus and the inner surface of the mold 5 (the difference between the brightness of the meniscus and the brightness of the inner surface of the mold 5) within the image is large, the boundary position can be readily recognized by dividing the image into the region corresponding to the meniscus and the region corresponding to the inner surface of the mold 5 by comparing against a single threshold value.

However, in continuous casting, the above brightness difference is often small, and the boundary position cannot be accurately recognized with the above-described approach in some cases. For example, in the powder casting mentioned above, the brightness difference tends to decrease because of the release agent floating on the meniscus. Because powder casting is the mainstream form of continuous casting nowadays, the frequency of failing in accurately recognizing the boundary position due to a small brightness difference is not low.

Accordingly, the control system 100 is configured to execute: estimating the boundary position based on an estimation model generated by machine learning so as to represent a relationship between input data based on video data including a plurality of images captured in time series by the camera 21 and the boundary position, and on new input data; and bringing the meniscus closer to a target height based on the estimation result of the boundary position. By using the video data, information not derivable from a single image, such as information regarding the movement in each part of the image, can be acquired. Therefore, the control system 100 configured to estimate the boundary position based on the estimation model generated by machine learning so as to represent a relationship between input data derived from the video data and the boundary position, and on new input data allows estimating the boundary position with high reliability. Consequently, the height of the meniscus can be maintained near the target height with high reliability, thereby improving the quality of the above steel slab.

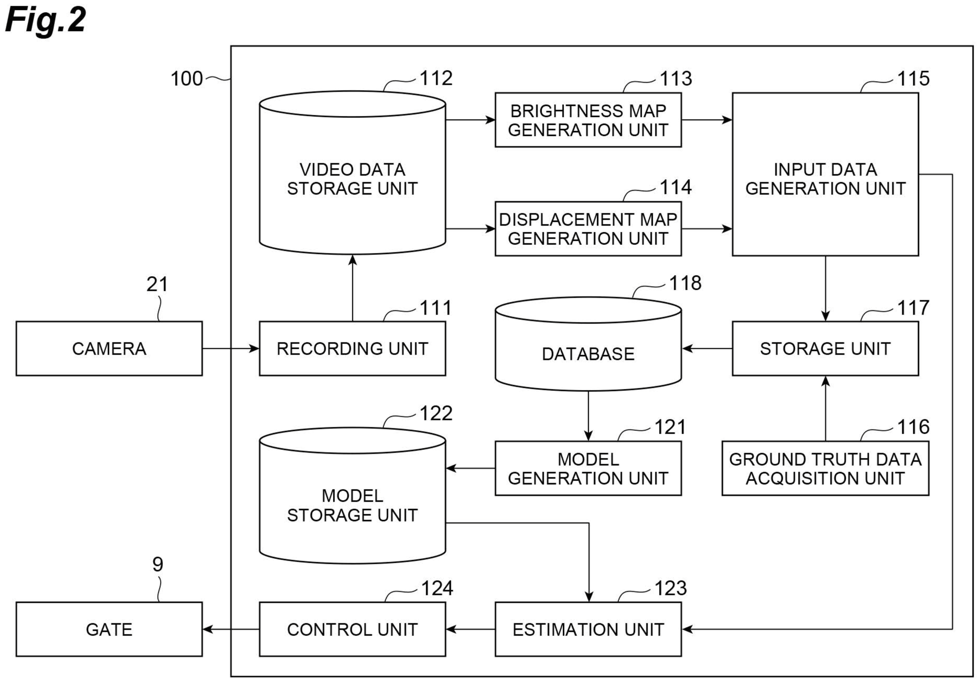

FIG. 2 is a block diagram illustrating an example functional configuration of the control system 100. As illustrated in FIG. 2, the control system 100 includes a recording unit 111, a video data storage unit 112, a displacement map generation unit 113, a brightness map generation unit 114, an input data generation unit 115, a ground truth data acquisition unit 116, a storage unit 117, and a database 118 as functional elements (hereinafter referred to as "functional blocks").

The recording unit 111 acquires a plurality of images captured in time series by the camera 21. For example, the recording unit 111 causes the camera 21 to capture images repeatedly at a predetermined cycle and acquires a plurality of images resulting from the repeated captures performed over a prescribed period. The recording unit 111 stores these images in the video data storage unit 112 in time series. In this way, the video data storage unit 112 at least temporarily stores video data including a plurality of images in time series.

Video data is data that can visually convey displacement of elements included in an image by sequentially displaying a plurality of images in time series. The reason why the displacement of the element included in the image is visually recognized by the moving image data is that the element included in the earlier image is also included in the later image at a position different from the position in the earlier image. Hereinafter, an element included in both an earlier image and a later image but at different positions is referred to as a "common displacement element." If the predetermined cycle is so long that there is no common displacement element in an earlier image and a later image, then the plurality of images obtained from repeated capturing at that cycle do not constitute video data. The predetermined cycle for acquiring a plurality of images constituting video data is, for example, 0.1 seconds or less, or may be 0.06 seconds or less or 0.03 seconds or less.

The displacement map generation unit 113 generates a displacement map based on the video data. The displacement map is data representing displacement vectors in time series for each of a plurality of areas in a field of view of the camera 21. For example, the displacement map generation unit 113 may use one image in the video data as a reference image and use an immediately earlier or immediately later image in the time series as a comparison image, and generate the displacement map based on a comparison between the reference image and the comparison image. The displacement map generation unit 113 may perform the following processes for each of the plurality of areas to generate the displacement map.
Process 1) Specify a common displacement element within the area in the reference image.
Process 2) Calculate the displacement vector of that area based on a difference between the position of the common displacement element in the reference image and the position of the common displacement element in the comparison image.

The displacement map generation unit 113 may generate a displacement map using a plurality of images included in the video data as reference images. For example, the displacement map generation unit 113 may execute the above processing for each of multiple reference images so as to calculate multiple displacement vectors for each of the plurality of areas, average these multiple displacement vectors, and adopt the average as the displacement vector of each area.

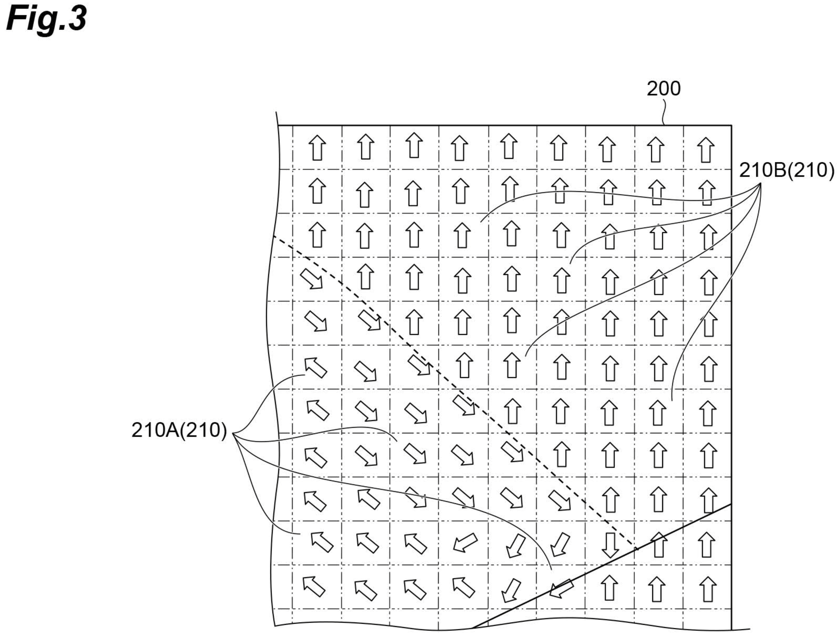

FIG. 3 schematically illustrates an example of the displacement map. The displacement map 200 illustrated in FIG. 3 represents displacement vectors 211 for each of a plurality of areas 210. Each of the plurality of areas 210 is one area obtained by dividing the field of view of the camera 21 into a matrix. Each of these areas 210 has multiple pixels arranged in a matrix.

The displacement vectors 211 in time series indicate in what direction and by how much a common displacement element has moved in the image. In FIG. 3, a broken line indicates the boundary between the meniscus and the inner surface of the mold 5. Between an area 210A corresponding to the meniscus and an area 210B corresponding to the inner surface of mold 5, a difference tends to occur in at least one of the direction and magnitude of the displacement vectors 211. In the illustrated example, the displacement vectors 211 in the area 210B that correspond to the inner surface of the mold 5 indicate an up-down tendency corresponding to the orientation of vibration of the mold oscillation device 11. By contrast, the displacement vectors 211 in the area 210A that correspond to the meniscus indicate a tendency reflecting the flow direction of molten steel generated by the electromagnetic stirring device 12. Thus, the boundary between the meniscus and the inner surface of mold 5 is likely to appear in the displacement map due to the difference in tendencies between the displacement vectors 211 in area 210A and the displacement vectors 211 in area 210B.

Returning to FIG. 2, the brightness map generation unit 114 generates a brightness map based on the video data. The brightness map represents brightness for each of a plurality of areas. For example, the brightness map generation unit 114 may include a brightness value corresponding to each of the plurality of areas 210 described above. The brightness map generation unit 114 may calculate the brightness value of each of the plurality of areas 210 based on the brightness values of multiple pixels. The brightness map generation unit 114 may, for example, calculate an average of pixel brightness values as the brightness value of each of the plurality of areas 210.

The brightness map generation unit 114 may calculate the brightness value of each of the plurality of areas 210 based on the brightness values in a plurality of images included in the video data. For example, the brightness map generation unit 114 may calculate the brightness value of each area 210 as an average of the brightness values in a plurality of images.

The brightness map generation unit 114 may generate a brightness map for each of the plurality of colors. For example, the brightness map generation unit 114 calculates the brightness value of the color red (R) for each of the areas 210 to produce an R brightness map. For example, the brightness map generation unit 114 calculates the brightness value of R based on the pixel brightness values for R included in each of the areas 210. Similarly, the brightness map generation unit 114 calculates the brightness value of the color green (G) for each of the areas 210 to produce a G brightness map, and calculates the brightness value of the color blue (B) for each of the areas 210 to produce a B brightness map.

The input data generation unit 115 generates input data based on the video data. For example, the input data generation unit 115 generates input data that includes at least the displacement map generated by the displacement map generation unit 113. As an example, the input data generation unit 115 generates input data that includes both the displacement map generated by the displacement map generation unit 113 and the brightness map generated by the brightness map generation unit 114. If the brightness map generation unit 114 generates brightness maps for a plurality of colors, then the input data generation unit 115 may generate input data that includes the displacement map generated by the displacement map generation unit 113 and the brightness maps for the plurality of colors generated by the brightness map generation unit 114.

The ground truth data acquisition unit 116 acquires ground truth data. The ground truth data indicates the boundary position recognized, without relying on the estimation model, based on the video data. For example, the ground truth data acquisition unit 116 may acquire, input via a user interface 196 (described later), data indicating the boundary position recognized by a user based on the video data. The storage unit 117 stores, in the database 118, a training record in which the input data generated by the input data generation unit 115 and the ground truth data acquired by the ground truth data acquisition unit 116 are associated. For example, the storage unit 117 associates the input data and the ground truth data derived from the same video data to generate a training record and stores the training record in the database 118.

The control system 100 further includes a model generation unit 121, a model storage unit 122, an estimation unit 123, and a control unit 124 as functional blocks. The model generation unit 121 generates the above estimation model by machine learning based on a plurality of training records stored in the database 118, and stores the generated estimation model in the model storage unit 122.

If the input data generation unit 115 produces input data including the displacement map, the model generation unit 121 generates an estimation model so as to represent the relationship between the input data including the displacement map and the boundary position.

If the input data generation unit 115 produces input data further including the brightness map, the model generation unit 121 generates an estimation model so as to represent the relationship between the input data further including the brightness map and the boundary position.

If the input data generation unit 115 produces input data further including the brightness maps for a plurality of colors, the model generation unit 121 generates an estimation model so as to represent the relationship between the input data further including the brightness maps for the plurality of colors and the boundary position.

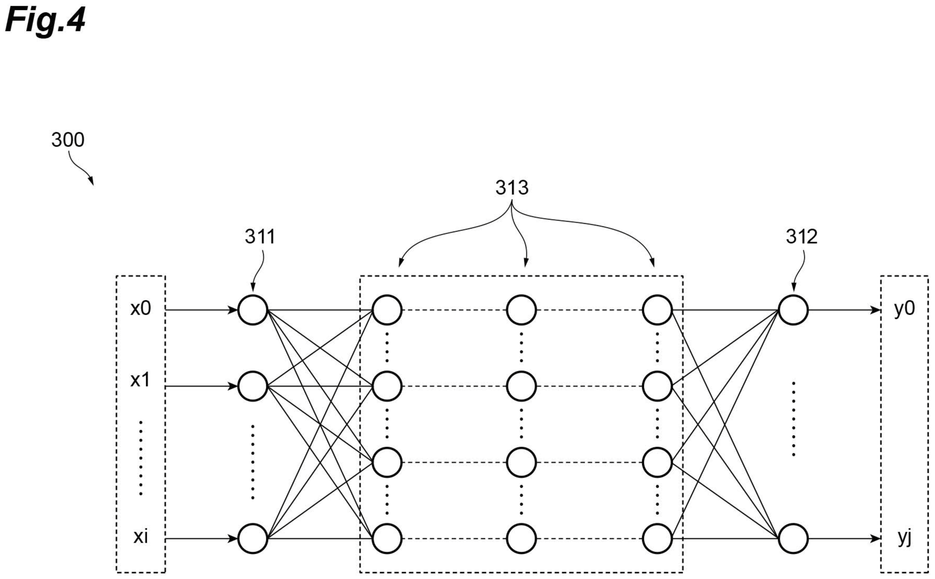

For example, the model generation unit 121 generates an estimation model that represents a relationship between the input data and the boundary position via multi-stage input-output relationships. The input-output relationship may be expressed through classification processing, which classifies inputs into some cases and generates outputs in accordance with the classification results, probabilistic classification processing, or the like. As an example, the model generation unit 121 may generate an estimation model via deep learning. FIG. 4 schematically illustrates an example of the estimation model generated via deep learning. An estimation model 300 illustrated in FIG. 4 is a neural network and includes an input layer 311, one or more intermediate layers 313, and an output layer 312. The input layer 311 outputs input vectors to the next intermediate layer 313. The intermediate layer 313 transforms input from the previous layer using an activation function and outputs the result to the next layer. The output layer 312 transforms input from the intermediate layer 313 that is farthest from the input layer 311, using an activation function, and outputs the transformed result as an output vector. In the estimation model 300, each activation function in each of the intermediate layers 313 and the activation function in the output layer 312 are an example of a multi-stage input-output relationship. In a process of transforming input using the activation function, the result of the transformation changes in accordance with the input. That is, since the result of transformation changes in accordance with the input case, the transformation using the activation function is an example of classification processing or probabilistic classification processing.

Returning to FIG. 2, the estimation unit 123 estimates the boundary position based on the estimation model stored in the model storage unit 122 and new input data. The new input data is input data that the input data generation unit 115 generates after the model generation unit 121 has caused the model storage unit 122 to store the estimation model that has been generated. For example, the new input data may be input data that the input data generation unit 115 generates based on a displacement map newly generated by the displacement map generation unit 113 and a generated brightness map newly generated by the brightness map generation unit 114 after the model generation unit 121 has already stored the estimation model in the model storage unit 122. For example, the estimation unit 123 inputs the new input data to the estimation model stored in the model storage unit 122 and estimates the boundary position based on the output of the estimation model in response to input of the new input data.

If the new input data that the input data generation unit 115 generates includes a newly generated displacement map generated by the displacement map generation unit 113, the estimation unit 123 estimates the boundary position based on the estimation model and the new input data including the newly generated displacement map.

If the input data that the input data generation unit 115 generates further includes a newly generated brightness map generated by the brightness map generation unit 114, the estimation unit 123 estimates the boundary position based on the estimation model and the new input data further including the newly generated brightness map.

If the input data that the input data generation unit 115 generates further includes newly generated brightness maps for a plurality of colors generated by the brightness map generation unit 114, the estimation unit 123 estimates the boundary position based on the estimation model and the new input data further including the newly generated brightness maps for the plurality of colors.

Based on the boundary position estimated by the estimation unit 123, the control unit 124 controls the inflow amount of molten steel into the mold 5 so as to bring the meniscus closer to the target height. Consequently, the estimation result for the boundary position can be utilized to automatically regulate the height of the meniscus.

For example, the control unit 124 may control the opening of the gate 9 so as to bring the meniscus closer to the target height. Controlling the opening of the gate 9 is one example of controlling the inflow amount of molten steel into the mold 5 because the inflow amount of molten steel into the mold 5 varies in accordance with the opening of the gate 9. The control unit 124 may control the gate 9 so as to bring the boundary position in the image closer to a target position corresponding to the target height.

The control unit 124 may calculate a height of the meniscus based on a correspondence between the boundary position and the height of the meniscus and a recognition result of the boundary position, and control the gate 9 so as to bring the calculated height of the meniscus closer to the target height. The correspondence between the boundary position and the height of the meniscus may be prepared in advance by an in-plant test or simulation.

The control unit 124 may calculate the height of the meniscus based on the inflow amount of molten steel into the mold 5, separate from the calculation result of meniscus height based on the recognition result of boundary position in the image (hereinafter referred to as "first calculation result"). For example, the control unit 124 may calculate the height of the meniscus by dividing the difference between the cumulative inflow amount of molten steel from an initial state in which no molten steel is in the mold 5 and the cumulative outflow amount of molten steel from the initial state by the cross-sectional area of the mold 5. Hereinafter, the calculation result of the height of the meniscus based on the molten steel inflow amount is referred to as the "second calculation result." If a difference between the first calculation result and the second calculation result exceeds a predetermined level (for example, a predetermined threshold), the control unit 124 may choose not to perform control of the molten steel inflow amount based on the first calculation result. Not performing control based on the first calculation result may include continuing control of the molten steel inflow amount based on the immediately previous first calculation result.

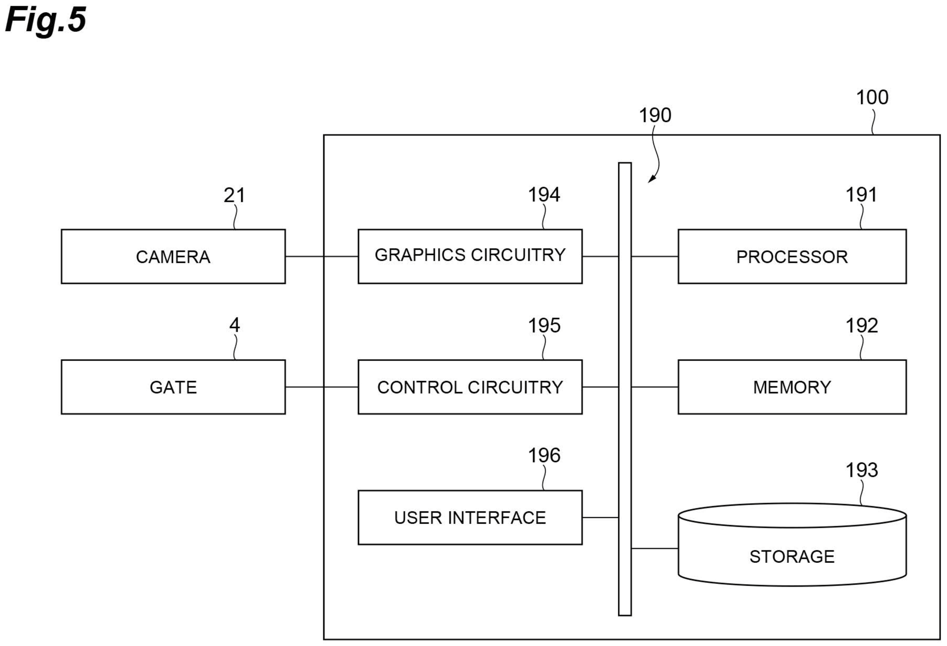

FIG. 5 is a block diagram illustrating an example hardware configuration of the control system 100. As illustrated in FIG. 5, the control system 100 includes circuitry 190. The circuitry 190 includes a processor 191, a memory 192, a storage 193, graphics circuitry 194, control circuitry 195, and a user interface 196.

The storage 193 is formed of one or more non-volatile memory devices such as a flash memory or a hard disk. The storage 193 stores a program for causing the control system 100 to perform: estimating the boundary position based on the estimation model and new input data; and bringing the meniscus closer to the target height based on the estimation result of the boundary position. For example, the storage 193 stores a program that causes the control system 100 to configure the above functional blocks.

The memory 192 is formed of one or more volatile memory devices such as a random-access memory. The memory 192 temporarily stores the program loaded from the storage 193. The processor 191 is formed of one or more arithmetic devices such as a central processing unit (CPU) or a graphics processing unit (GPU). By executing the program loaded into the memory 192, the processor 191 causes the control system 100 to configure the above functional blocks. The computation results of the processor 191 are temporarily stored in the memory 192.

The graphics circuitry 194 controls the camera 21 in response to requests from the processor 191. The control circuitry 195 operates the gate 9 in response to requests from the processor 191. The user interface 196 includes a display device and an input device. The display device displays information to a user. Examples of the display device include a liquid crystal display (LCD) and an organic electro-luminescence (EL) display. The input device acquires user input. Examples of the input device include a keyboard or a mouse. The input device may also be a touch panel integrated with the display device. The hardware configuration described above is merely one example and may be modified. For example, the circuitry 190 may be divided into a plurality of circuits that can communicate with each other.

### [Control Procedure]

Next, an example procedure for controlling the gate 9 executed by the control system 100 is described. This control procedure includes an example meniscus estimation procedure executed by the control system 100 as an example of a meniscus estimation method. The meniscus estimation procedure includes: acquiring video data; generating input data based on the video data; acquiring ground truth data indicating the recognition result of the boundary position based on the video data; storing a training record associating the input data with the ground truth data in the database 118; generating an estimation model representing a relationship between the input data and the boundary position based on the plurality of training records stored in the database 118; generating new input data based on newly acquired video data; and estimating the boundary position based on the estimation model and the new input data. Hereinafter, an example procedure is described separately as a procedure for generating the estimation model and a procedure for controlling the height of the meniscus.

### (Procedure for Generating the Estimation Model)

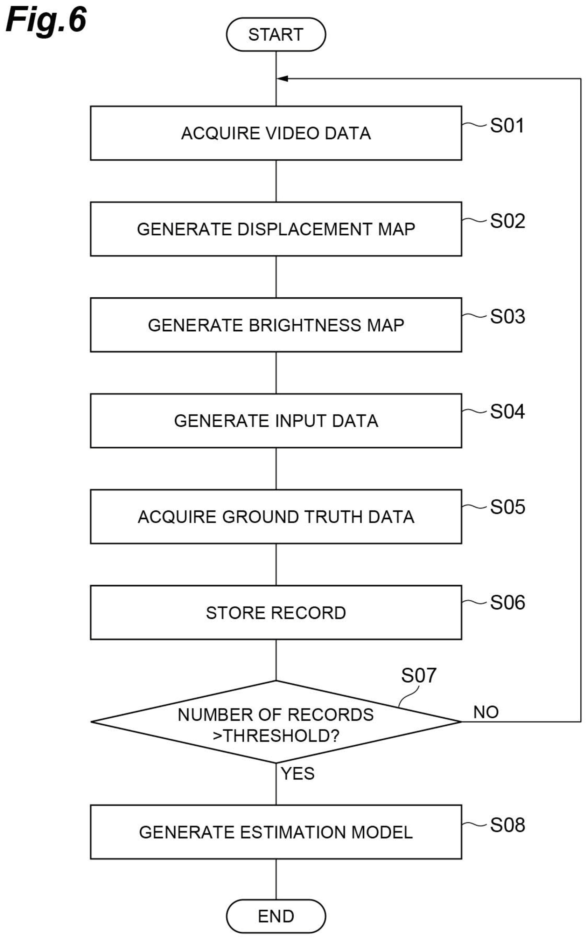

As illustrated in FIG. 6, the control system 100 first executes steps S01, S02, S03, and S04. In step S01, the recording unit 111 stores, in the video data storage unit 112, video data that includes a plurality of images captured in time series by the camera 21. In step S02, based on the video data stored in the video data storage unit 112, the displacement map generation unit 113 generates the above-described displacement map. In step S03, based on the video data stored in the video data storage unit 112, the brightness map generation unit 114 generates the above-described brightness map. In step S04, the input data generation unit 115 generates input data that includes the displacement map generated by the displacement map generation unit 113 and the brightness map generated by the brightness map generation unit 114.

Next, the control system 100 executes steps S05, S06, and S07. In step S05, the ground truth data acquisition unit 116 acquires the above-described ground truth data. In step S06, the storage unit 117 generates a training record that associates the input data generated by the input data generation unit 115 with the ground truth data acquired by the ground truth data acquisition unit 116 and stores the training record in the database 118. In step S07, the model generation unit 121 checks whether the number of training records stored in the database 118 exceeds a predetermined threshold value.

If, in step S07, it is determined that the number of training records does not exceed the threshold, the control system 100 returns to step S01. Thereafter, until the number of training records exceeds the threshold, the system repeatedly obtains video data, generates input data, acquires ground truth data, and accumulates training records.

If, in step S07, it is determined that the number of training records exceeds the threshold, the control system 100 executes step S08. In step S08, the model generation unit 121 generates the above-described estimation model by machine learning based on the training records stored in the database 118, and stores the estimation model in the model storage unit 122. This completes the procedure for generating the estimation model.

Note that step S03 may be executed before step S02. The processing periods of steps S02 and S03 may partially overlap. Further, the order in which step S05 is performed after step S04 is merely one example; step S05 may be performed at any time after step S01 but before step S06.

### (Procedure for Controlling Meniscus Height)

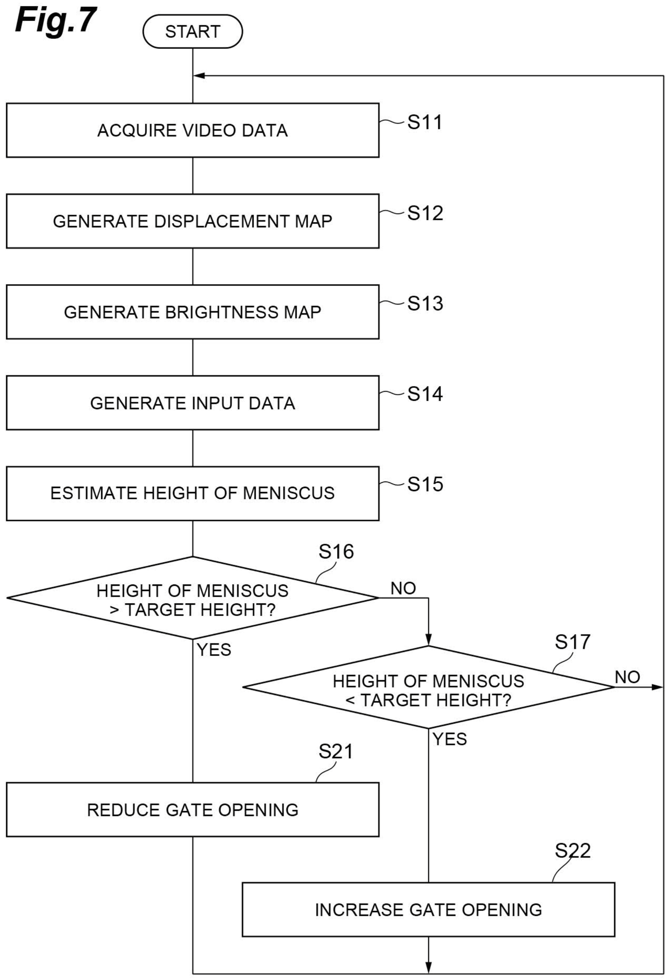

The procedure illustrated in FIG. 7 is executed after the above procedure for generating the estimation model. As illustrated in FIG. 7, the control system 100 first executes steps S11, S12, S13, S14. In step S11, after the estimation model has been generated, the recording unit 111 stores, in the video data storage unit 112, video data including a plurality of images captured in time series by the camera 21. Hereinafter, the video data that the recording unit 111 stores in the video data storage unit 112 in step S11 is referred to as "new video data."

In step S12, based on the new video data, the displacement map generation unit 113 newly generates a displacement map. In step S13, based on the new video data, the brightness map generation unit 114 newly generates a brightness map. In step S14, the input data generation unit 115 generates new input data including the newly generated displacement map from the displacement map generation unit 113 and the newly generated brightness map from the brightness map generation unit 114.

Next, the control system 100 executes steps S15 and S16. In step S15, the estimation unit 123 estimates the boundary position based on the estimation model and the new input data. In step S16, the control unit 124 checks whether the height of the meniscus exceeds the target height based on the estimation result of the boundary position. If, in step S16, it is determined that the height of the meniscus does not exceed the target height, the control system 100 executes step S17. In step S17, the control unit 124 checks whether the height of the meniscus is below the target height based on the estimation result of the boundary position. If, in step S17, it is determined that the height of the meniscus is not below the target height, the control system 100 returns to step S11.

If, in step S16, it is determined that the height of the meniscus exceeds the target height, the control system 100 executes step S21. In step S21, the control unit 124 reduces the opening of the gate 9 so as to reduce the inflow amount of molten steel into the mold 5. For example, the control unit 124 may reduce the opening of the gate 9 by a predetermined reduction amount. The control unit 124 may calculate a reduction amount by performing proportional calculation, proportional-integral calculation, or proportional-integral-derivative calculation on the difference between the height of the meniscus and the target height, and then reduce the opening of the gate 9 by that calculated reduction amount.

If, in step S17, it is determined that the height of the meniscus is below the target height, the control system 100 executes step S22. In step S22, the control unit 124 increases the opening of the gate 9 so as to increase the inflow amount of molten steel into the mold 5. For example, the control unit 124 may increase the opening of the gate 9 by a predetermined increase amount. The control unit 124 may calculate an increase amount by performing proportional calculation, proportional-integral calculation, or proportional-integral-derivative calculation on the difference between the target height and the height of the meniscus, and then increase the opening of the gate 9 by that calculated increase amount.

### [Conclusion]

The embodiments described above include the following configuration:
(1) A continuous casting system 1 including: a camera 21 configured to capture a meniscus of molten steel contained in a mold 5 for continuous casting and an inner surface of the mold 5; and an estimation unit 123 configured to estimate a boundary position between the meniscus and the inner surface of the mold 5 within the field of view of the camera 21 based on an estimation model and new input data, the estimation model being generated by machine learning so as to represent a relationship between input data based on video data including a plurality of images captured in time series by the camera 21 and the boundary position.
   According to the present device, the boundary position is estimated based on the estimation model generated by machine learning so as to represent the relationship between input data based on the video data and the boundary position, and on new input data, and based on the video data for estimating the boundary position. By using the video data, information not derivable from a single image, such as information regarding the movement in each part of the image, can be acquired. Therefore, according to the present device, the boundary position can be estimated with high reliability even when the brightness difference is small.
(2) The continuous casting system 1 according to (1), further including a displacement map generation unit 113 configured to generate, based on the video data, a displacement map representing displacement vectors in time series for each of a plurality of areas in the field of view of the camera 21, wherein the estimation model is generated so as to represent a relationship between the input data including the displacement map and the boundary position, and the estimation unit 123 is configured to estimate the boundary position based on the estimation model and new input data including a newly generated displacement map.
   By converting the distribution of time-series displacement tendencies into data as a displacement map and incorporating the displacement map into the input data, the boundary position can be estimated readily and reliably.
(3) The continuous casting system 1 according to (2), further including a brightness map generation unit 114 configured to generate, based on the video data, a brightness map representing brightness for each of a plurality of areas, wherein the estimation model is generated so as to represent a relationship between the input data further including the brightness map and the boundary position, and wherein the estimation unit 123 is configured to estimate the boundary position based on the estimation model and new input data further including a newly generated brightness map.
   Even if powder floats on the meniscus, a certain degree of brightness difference may still occur between the meniscus and the inner surface of the mold 5. Therefore, by further including the brightness map in the input data, the boundary position can be estimated with higher reliability.
(4) The continuous casting system 1 according to (3), wherein the brightness map generation unit 114 is configured to generate a brightness map for each of a plurality of colors, wherein the estimation model is generated so as to represent a relationship between the boundary position and the input data further including the brightness maps for the plurality of colors, and wherein the estimation unit 123 is configured to estimate the boundary position based on the estimation model and new input data further including the newly generated brightness maps for the plurality of colors.
   Even when the brightness difference between the meniscus and the inner surface of the mold 5 is small, there may still be a relatively large difference in color between the meniscus and the mold 5. Therefore, by further incorporating the brightness maps for a plurality of colors into the input data, the boundary position can be estimated with higher reliability.
(5) The continuous casting system 1 according to any one of (1) to (4), further including: a ground truth data acquisition unit 116 configured to acquire ground truth data indicating the boundary position recognized, without relying on the estimation model, based on the video data; a storage unit 117 configured to accumulate, in a database 118, a training record in which the input data is associated with the ground truth data; and a model generation unit 121 configured to generate the estimation model by machine learning based on a plurality of training records stored in the database 118.
   Because the device itself executes a series of processes from accumulating training records to generating the estimation model based on the accumulated learning data, convenience can be improved.
(6) The continuous casting system 1 according to (5), wherein the model generation unit 121 is configured to generate the estimation model by deep learning.
   The difficult-to-formulate relationship between the input data based on the video data and the boundary position can be modeled with high reliability through deep learning.
(7) The continuous casting system 1 according to any one of (1) to (6), further including a control unit 124 configured to control an inflow amount of molten steel into the mold 5 so as to bring the meniscus closer to a target height based on the estimated boundary position.
   The estimation result of the boundary position can be utilized for automatically adjusting the height of the meniscus.
(8) The continuous casting system according to (7), wherein the control unit 124 is configured to calculate a height of the meniscus based on the inflow amount of molten steel into the mold 5, and is configured not to perform control of the inflow amount of the molten steel based on an estimation result of the boundary position when a difference between the height of the meniscus corresponding to the boundary position estimated by the estimation unit 123 and a calculation result of the height of the meniscus based on the inflow amount of molten steel exceeds a predetermined level.
The reliability of control based on the estimation result of the boundary position can be improved.

(8) A meniscus estimation method including: acquiring, by a camera 21 configured to capture a meniscus of molten steel contained in a mold 5 for continuous casting and an inner surface of the mold 5, video data including a plurality of images captured in time series; generating input data based on the video data; acquiring ground truth data indicating a recognition result of a boundary position between the meniscus and the inner surface of the mold 5 in the field of view of the camera 21, the recognition result being based on the video data; accumulating, in a database 118, a training record associating the input data with the ground truth data; generating, based on a plurality of training records stored in the database 118, an estimation model representing a relationship between the input data and the boundary position; generating new input data based on newly acquired video data; and estimating the boundary position based on the estimation model and the new input data.

### Reference Signs List

5: mold, 21: camera, 113: displacement map generation unit, 114: brightness map generation unit, 116: ground truth data acquisition unit, 117: storage unit, 118: database, 121: model generation unit, 123: estimation unit, 124: control unit

## Claims

1. A continuous casting system comprising:
a camera configured to capture a meniscus of molten steel contained in a mold for continuous casting and an inner surface of the mold;
a displacement map generation unit configured to generate, based on video data including a plurality of images captured in time series by the camera, a displacement map representing displacement vectors in time series for each of a plurality of areas in a field of view of the camera; and
an estimation unit configured to estimate a boundary position between the meniscus and the inner surface of the mold within the field of view of the camera based on an estimation model and new input data based on newly captured video data, the estimation model being generated by machine learning so as to represent a relationship between input data including the displacement map and the boundary position, the new input data including a newly generated displacement map based on newly captured video data.

2. The continuous casting system according to claim 1, further comprising:
a brightness map generation unit configured to generate, based on the video data, a brightness map representing brightness for each of a plurality of areas,
wherein the estimation model is generated so as to represent a relationship between the boundary position and the input data further including the brightness map, and
wherein the estimation unit is configured to estimate the boundary position based on the estimation model and new input data further including a newly generated brightness map based on newly captured video data.

3. The continuous casting system according to claim 2,
wherein the brightness map generation unit is configured to generate the brightness map for each of a plurality of colors,
wherein the estimation model is generated so as to represent a relationship between the boundary position and the input data further including brightness maps for the plurality of colors, and
wherein the estimation unit is configured to estimate the boundary position based on the estimation model and new input data further including the brightness maps for the plurality of colors newly generated based on newly captured video data.

4. The continuous casting system according to any one of claims 1 to 3, further comprising:
a ground truth data acquisition unit configured to acquire ground truth data indicating the boundary position recognized, without relying on the estimation model, based on the video data;
a storage unit configured to accumulate, in a database, a training record in which the input data is associated with the ground truth data; and
a model generation unit configured to generate the estimation model by machine learning based on a plurality of training records accumulated in the database.

5. The continuous casting system according to claim 4,
wherein the model generation unit is configured to generate the estimation model by deep learning.

6. The continuous casting system according to any one of claims 1 to 3, further comprising:
a control unit configured to control an inflow amount of the molten steel into the mold based on the estimated boundary position so as to bring the meniscus closer to a target height.

7. The continuous casting system according to claim 6, wherein the control unit is configured to calculate a height of the meniscus based on the inflow amount of the molten steel into the mold; and
is configured not to perform control of the inflow amount of the molten steel based on an estimation result of the boundary position when a difference between the height of the meniscus corresponding to the boundary position estimated by the estimation unit and a calculation result of the height of the meniscus based on the inflow amount of the molten steel exceeds a predetermined level.

8. A meniscus estimation method comprising:
acquiring, by a camera configured to capture a meniscus of molten steel contained in a mold for continuous casting and an inner surface of the mold, video data including a plurality of images captured in time series;
generating, based on the video data, a displacement map representing displacement vectors in time series for each of a plurality of areas in a field of view of the camera;
acquiring ground truth data indicating a recognition result of a boundary position between the meniscus and the inner surface of the mold in the field of view of the camera, the recognition result being based on the video data;
accumulating, in a database, a training record associating input data including the displacement map with the ground truth data;
generating, based on a plurality of the training records stored in the database, an estimation model representing a relationship between the input data and the boundary position;
generating, based on newly acquired video data, a newly generated displacement map; and
estimating the boundary position based on the estimation model and input data including the newly generated displacement map.
